# EUROPEAN PATENT APPLICATION

(11) **EP 4 528 049 A1**
(43) Date of publication of application: **26.03.2025**
(21) Application number: 24192608.8
(22) Date of filing: 02.08.2024
(51) Int. Cl.: E04H 4/00, E04H 4/04, F16B 7/04

(54) **SUPPORT ASSEMBLY AND FRAME POOL**

(30) Priority: 20.09.2023 CN 202322570945 U
(71) Applicant: Bestway Inflatables & Material Corp., Shanghai 201812 (CN)
(72) Inventor: Zeng, Xianglin, Shanghai, 201812 (CN)
(74) Representative: Gulde & Partner

(57) **Abstract**

The present invention discloses a support assembly, comprising: a first horizontal support member, at least one mounting hole being provided in a lower surface of an outer wall of the first horizontal support member; an above-ground support member having at least one mounting end; mounting sleeves arranged in the mounting holes, the mounting sleeve each comprising: a mounting sleeve body comprising a first side wall and an accommodating cavity, the accommodating cavity accommodating the mounting end; and at least one fixing portion arranged on the first side wall, each of the at least one fixing portion being configured to arrange the mounting end in the mounting sleeve. The present invention has a good rust prevention effect and is convenient and fast to mount. The present invention further provides a frame pool comprising the support assembly.

## Description

### Technical Field

The present invention relates to the technical field of above-ground pools, and in particular to a support assembly and a frame pool.

### Background Art

An above-ground frame pool is an outdoor leisure product for people. Frame pools currently on the market support pool liners by means of horizontal support members such that the pool liners accommodate water, and the horizontal support members are supported on the ground by means of above-ground support members.

At present, the connection between the above-ground support members and the horizontal support members is implemented mainly by forming through holes at end portions of the above-ground support members, forming mounting holes at the bottoms of the horizontal support members, and using connecting members (such as V-shaped spring pins or other connecting components) to secure the end portions of the above-ground support members in the mounting holes.

In the above solution, water is likely to enter the insides of the above-ground support members, causing a poor rust prevention effect and a complex mounting process.

### Summary of the Invention

An objective of the present invention is to solve the current problem that water is likely to enter the insides of above-ground support members, causing a poor rust prevention effect. The present invention provides a support assembly and a frame pool, which can effectively improve a rust prevention effect of above-ground support members and are convenient and fast to mount.

In order to solve the above technical problem, an implementation of the present invention discloses a support assembly, comprising:
a first horizontal support member, at least one mounting hole being provided in a lower surface of an outer wall of the first horizontal support member;
an above-ground support member having at least one mounting end;
mounting sleeves arranged in the mounting holes, the mounting sleeves each comprising:
   a mounting sleeve body comprising a first side wall and an accommodating cavity, the accommodating cavity accommodating the mounting end; and
   at least one fixing portion arranged on the first side wall, each of the at least one fixing portion being configured to arrange or hold the mounting end in the mounting sleeve.

According to another specific implementation of the present invention, the mounting sleeve body comprises:
at least one bump arranged on an outer surface of the first side wall; and
an annular flange extending along the outer surface of the first side wall toward the outside of the accommodating cavity, the annular flange being spaced from the bump to define a limiting groove.

According to another specific implementation of the present invention, the outer wall of the first horizontal support member is bent in a position corresponding to the mounting hole toward the inside of the first horizontal support member to form a snap-fitting portion, and the snap-fitting portion is arranged in the limiting groove to arrange or hold the mounting sleeve body in the mounting hole.

According to another specific implementation of the present invention, a through hole is provided in a side wall of the mounting end; and
the first side wall is provided with a slot, each of the at least one fixing portion being arranged in the slot and comprising:
an elastic arm comprising a first end and a second end, the first end being connected to an edge of the slot; and
a protrusion arranged at the second end and snap-fitting with the through hole.

According to another specific implementation of the present invention, the fixing portion comprises:
a plurality of protruding ribs arranged on an inner surface of the first side wall at intervals in a circumferential direction of the mounting sleeve body.

According to another specific implementation of the present invention, a cross section of the mounting sleeve body is circular or oval.

According to another specific implementation of the present invention, the above-ground support member is U-shaped.

According to another specific implementation of the present invention, an outer diameter of the mounting end is less than an outer diameter of a remaining portion of the above-ground support member.

The implementation of the present invention further discloses a frame pool, comprising:
a pool liner; and
a pool frame for supporting the pool liner, the pool frame comprising:
a plurality of support assemblies as described in any one of the above specific implementations, the plurality of support assemblies being sequentially connected in a horizontal direction to form an annular frame.

The implementation of the present invention further discloses a frame pool, comprising:
a pool liner; and
a pool frame for supporting the pool liner, the pool frame comprising:
   two arc-shaped portions symmetrically arranged, each arc-shaped portion comprising a plurality of second horizontal support members, a plurality of first vertical support members and a plurality of Tjoints, every two adjacent second horizontal support members being connected to the first vertical support member by means of one of the T-joints; and
   two straight portions arranged between the two arc-shaped portions, any one of the two straight portions comprising at least one support assembly as described in any one of the above specific implementations, and the first horizontal support member being connected to the arc-shaped portions.

### Brief Description of the Drawings

FIG. 1 shows a perspective view of a frame pool according to an embodiment of the present invention;
FIG. 2 shows a perspective view of a support assembly according to an embodiment of the present invention;
FIG. 3 shows a partial enlarged view of part A in FIG. 2;
FIG. 4 shows an exploded view of a support assembly according to an embodiment of the present invention;
FIG. 5 shows a perspective view of a mounting sleeve of a support assembly according to an embodiment of the present invention;
FIG. 6 shows a cross-sectional view of a connection of a first horizontal support member, an above-ground support member and a mounting sleeve of a support assembly according to an embodiment of the present invention;
FIG. 7 shows a perspective view of a mounting sleeve of a support assembly according to another embodiment of the present invention;
FIG. 8 shows a cross-sectional view of a connection of a first horizontal support member, an above-ground support member and a mounting sleeve of a support assembly according to another embodiment of the present invention; and
FIG. 9 shows an exploded view of a support assembly according to another embodiment of the present invention.

### Detailed Description of Embodiments

Implementations of the present invention are illustrated below by way of specific embodiments, and those skilled in the art would have readily understood other advantages and effects of the present invention from the content disclosed in the description. Although the description of the present invention will be introduced in conjunction with preferred embodiments, it does not mean that features of the present invention are limited to the implementations. On the contrary, an objective of introducing the present invention in conjunction with the implementations is to encompass other options or modifications that may be extended on the basis of the claims of the present invention. The following description contains numerous specific details in order to provide deep understanding of the present invention. The present invention may also be implemented without these details. In addition, in order to avoid confusing or obscuring key points of the present invention, some specific details will be omitted in the description. It should be noted that the embodiments and the features thereof in the present invention can be combined with each other without conflicts.

It should be noted that in the description, like reference signs and letters denote like items in the following drawings. Therefore, once an item is defined in one of the drawings, it is not necessary to further define and explain the item in the subsequent drawings.

In the description of the present embodiments, it should be noted that the orientation or position relationships indicated by the terms such as "upper", "lower", "inner" and "bottom" are based on the orientation or position relationships shown in the drawings or the orientation or position relationships in which a product of the present invention is customarily placed during use, and are only intended to facilitate description of the present invention and simplify the description, rather than indicating or implying that the apparatus or element indicated must have a specific orientation or be configured and operated in the specific orientation, and therefore cannot be construed as limiting the present invention.

The terms "first", "second", etc. are only intended to distinguish the description, and should not be construed as indicating or implying the relative importance.

In the description of the embodiments, it should also be noted that the terms "arrange", "connected", and "connection" should be understood in a broad sense, unless otherwise explicitly specified and limited. For example, the connection can be a secured connection, a detachable connection, or an integral connection; or may be a mechanical connection or an electrical connection; and can be directly connected, or indirectly connected by means of an intermediate medium, or communication between interiors of two elements. For those of ordinary skill in the art, the specific meaning of the terms mentioned above in the embodiments should be understood in specific cases.

In order to make objectives, technical solutions and advantages of the present invention clearer, the implementations of the present invention will be further described in detail below in conjunction with the drawings.

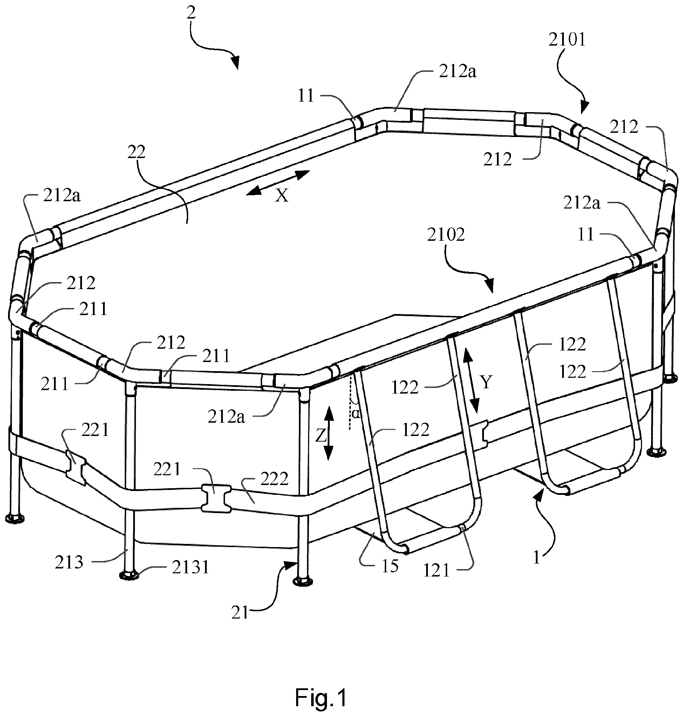

An embodiment of the present application provides a support assembly 1. Referring to FIG. 1, the support assembly 1 is a part of a pool frame 21 of a frame pool 2 so as to support the pool frame 21 on the ground. The support assembly 1 provided by the embodiment of the present application has the advantages of a good rust prevention effect and convenient and fast mounting (see the following description for details).

Exemplarily, referring to FIG. 1, an embodiment of the present application provides a frame pool 2, comprising: a pool frame 21 and a pool liner 22.

Specifically, the pool frame 21 supports the pool liner 22 on the ground to form the frame pool 2, so as to store water in a water storage space enclosed by the pool liner 22.

Exemplarily, the pool frame 21 may comprise a plurality of second horizontal support members 211, a plurality of T-joints 212, a plurality of first vertical support members 213 and a plurality of support assemblies 1. Viewed from the top, the pool frame 21 of the embodiment of the present application may be of a substantially oval structure. The pool frame 21 of the oval structure may have arc-shaped portions 2101 and straight portions 2102. However, the pool frame 21 is not limited to an oval shape.

Every two adjacent second horizontal support members 211 may be connected to one vertical support member 213 by means of one T-joint 212. With such a connection method, a plurality of second horizontal support members 211 and the vertical support members 213 are sequentially connected to form arc-shaped portions 2101 of the structure. Correspondingly, the plurality of support assemblies 1 may be sequentially connected in a horizontal direction X to form straight portions 2102 of the structure.

In the above-mentioned frame pool 2, the frame pool 2 is supported on the ground by means of the first vertical support members 213 and the at least one support assembly 1, wherein the at least one support assembly 1 has an improved rust prevention effect, thus have longer service life and can guarantee the safety of the frame pool 2.

In another possible implementation, the pool frame 21 may comprise a plurality of support assemblies 1, the plurality of support assemblies 1 being sequentially connected to form an annular frame. The shape of the pool frame is not specifically limited. Viewed from the top, the pool frame 21 may be configured to have a rectangular shape (not shown, four sides of a structure of the rectangular pool frame are sequentially connected by the plurality of support assemblies 1), an oval shape, or other shapes.

In a possible implementation, a bottom end of the first vertical support member 213 in a vertical direction Z may be connected to a support base 2131, and the support base 2131 is configured to increase the contact area between the first vertical support member 213 and the ground, so as to improve the overall stability of the pool frame 21.

Exemplarily, continuing to refer to FIG. 1, an outer surface of the pool liner 22 may be provided with a fixing means 221 and a reinforcing band 222, and the fixing means 221 is connected to the outer surface of the pool liner 22. Specifically, each fixing means 221 may be arranged on the outer surface of the pool liner 22 between two adjacent first vertical support members 213, and the reinforcing band 222 passes through the fixing means 221, and is arranged around the frame pool 2 on outer surfaces of the first vertical support members 213 to bind the first vertical support members 213 between the pool liner 22 and the reinforcing band 222, such that the first vertical support members 213 can lean against the outer surface of the pool liner 22, thereby improving the tension of the pool liner 22 and preventing the first vertical support members 213 from deflecting toward the outside of the pool.

In some possible implementations, the reinforcing band 222 may be arranged on the frame pool 2 at a height approximately equal to 1/3 of the height of the frame pool 2, measured from the bottom, so that a lower portion structure of the frame pool 2 can be effectively reinforced, and the lower portion of the pool liner 22 of the frame pool 2 has a greater bearing capacity. The reinforcing band 222 may be arranged on the frame pool 2 at a height between ¼ and ½ of the height of the frame pool 2, preferably between 30% and 35% of the height of the frame pool 2.

The specific structure of the support assembly 1 will be described below in detail with reference to the accompanying drawings.

### Embodiment I

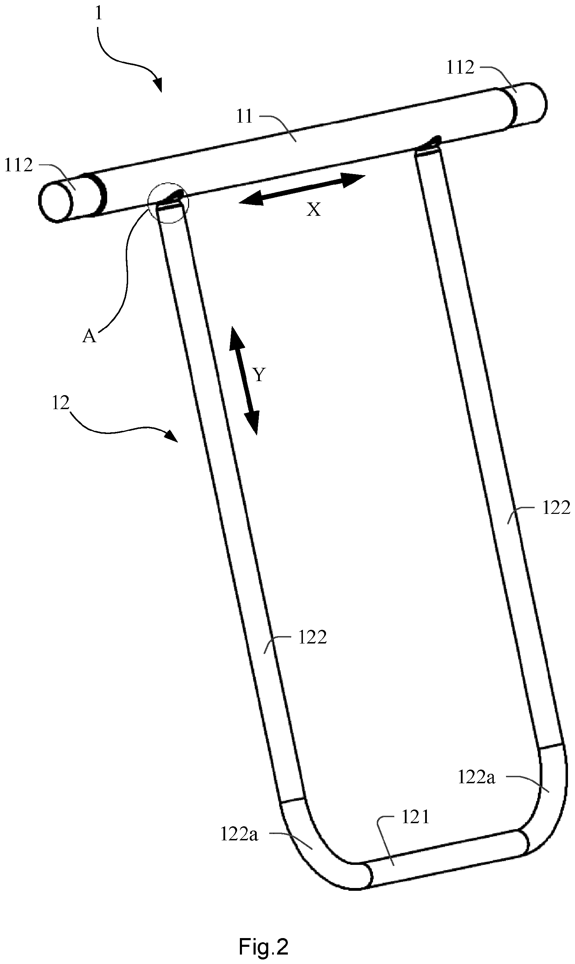

Referring to FIGS. 2 to 6, a support assembly 1 according to an embodiment of the present application comprises: a first horizontal support member 11, an above-ground support member 12 and mounting sleeves 13a. The above-ground support member 12 and the first horizontal support member 11 are connected by means of the mounting sleeves 13a. It should be noted that the above-mentioned first vertical support member 213 and the T-joint 212 may also be connected by means of the mounting sleeve 13a, and a connection method is the same as that in the embodiment of the present application (see below for details). The mounting sleeves 13a are preferably provided replaceable such that they can be replaced if broken.

Exemplarily, the first horizontal support member 11 extends in a horizontal direction X, and two mounting holes 110 are provided in a lower surface 113 of an outer wall of the first horizontal support member 11. Correspondingly, the number of the mounting sleeves 13a is two and corresponds to the number of the mounting holes 110 on a one-to-one basis, and each mounting sleeve 13a is detachably arranged in one mounting hole 110.

The embodiment of the present application does not specifically limit the number of the mounting holes 110. Exemplarily, the number of the mounting holes 110 may also be one, three or four, and correspondingly, the number of the mounting sleeves 13a is the same as the number of the mounting holes 110, such that each mounting sleeve 13a is detachably arranged in one mounting hole 110.

Exemplarily, in the horizontal direction X, two ends of the first horizontal support member 11 are respectively provided with a mounting portion 112, and the mounting portion 112 is configured to connect the first horizontal support member 11 to one T-joint 212 or another first horizontal support member 11.

Illustratively, the above-ground support member 12 has at least one mounting end and a support portion. The support portion is configured to support on the ground being preferably in direct contact with the ground. Each mounting end is detachably arranged in one mounting sleeve 13a (see below for details). In a preferred embodiment, the mounting end is an end opposite the end which comprises the support portion.

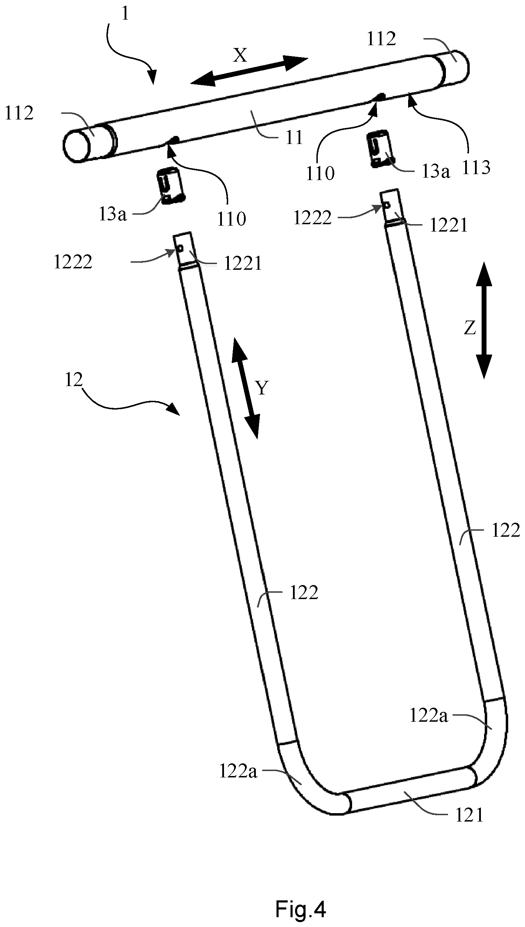

Specifically, referring to FIGS. 2 and 4, in the embodiment of the present application, the above-ground support member 12 is an inclined support member which comprises one horizontal portion 121 (i.e. the support portion) and two vertical portions 122. The two vertical portions 122 are connected to the horizonal portion 121. The two vertical portions 122 are preferably respectively provided at two ends of the horizontal portion 121. One end of each vertical portion 122 of the two vertical portions 122 is connected to the horizontal portion 121, and the other end is connected to or forms the mounting end 1221 (i.e. an end away from the horizontal portion 121), that is, each inclined support member is preferably provided with two mounting ends 1221. The two vertical portions 122 and one horizontal portion 121 may form a "U" shape, wherein the horizontal portion 121 is configured to support on the ground, and the mounting ends 1221 are arranged in the mounting sleeves 13a.

Correspondingly, in the embodiment of the present application, the first horizontal support member 11 is provided with two mounting holes 110, one mounting sleeve 13a is provided in each of the two mounting holes 110, and each mounting sleeve 13a accommodates one mounting end 1221.

In another possible implementation, two vertical portions 122 and one horizontal portion 121 are of an integrally formed structure which is preferably in a "U" shape and supports the first horizontal support member 11.

Referring to FIG. 1, when the inclined support member is supported on the ground, the two vertical portions 122 are arranged at an angle relative to a vertical direction Z, and an included angle between each vertical portion 122 of the two vertical portions 122 and the vertical direction Z is represented by a. The included angle α is not specifically limited in the embodiment of the present application and can be adjusted according to an actual size of the frame pool 2. The support member is inclined such that the mounting ends 1221 are closer to the center of the pool than the horizontal portion 121.

In one embodiment, during installation of the support portion to the first horizontal support member 11 and mounting the mounting ends 1221 into the mounting holes 110, the first horizontal support member may be provided rotatable to allow easier insertion of the support portion. When installed, the above-ground support member 12 may be rotated to its final position until the desired angle of inclination is reached, whereupon the first horizontal support member 11 becomes fixed with respect to rotation. This may be achieved by corresponding anti-rotation fixation means in the first horizontal support member 11 and its neighboring structural elements, like the T-joints 212. In one embodiment, the corresponding anti-rotation fixation means may be provided via corresponding interlocking protrusions and indentations. The anti-rotation fixation means may be provided releasable to allow easier de-mounting of the support portion to the first horizontal support member 11.

The specific structure of the above-ground support member 12 is not limited to the above-mentioned inclined support member. For example, the above-ground support member 12 may also be a first vertical support member 213 as shown in FIG. 1, wherein an end of the first vertical support member that is provided with the support base 2131 is taken as the support portion, and the mounting end 1221 fitting with the mounting sleeve 13a is arranged at an end of the first vertical support member 213 away from the support base 2131.

Continuing to refer to FIGS. 4 to 6, each mounting sleeve 13a comprises: one mounting sleeve body 131 and preferably two fixing portions 133. The mounting sleeve body 131 has an opening 1311 at an end extending in a first direction Y (the first direction Y is perpendicular to the horizontal direction X in the embodiment of the present application), and the mounting sleeve body 131 has a first side wall 130 and an accommodating cavity 1312 defined by the first side wall 130. The opening 1311 is in communication with the accommodating cavity 1312, and the opening 1311 is configured for the mounting end 1221 to be inserted, such that the mounting end 1221 is accommodated in the accommodating cavity 1312. After the mounting end 1221 is inserted into the accommodating cavity 1312, the mounting end 1221 is arranged, held or fixed in the accommodating cavity 1312 of the mounting sleeve body 131 by means of the fixing portion 133 provided on the first side wall, finally allowing the above-ground support member 12 to support the first horizontal support member 11, such that the connection between the above-ground support member 12 and the first horizontal support member 11 can be implemented without any additional connecting component.

The number of the fixing portions 133 is not specifically limited in the embodiment of the present application. For example, the number of the fixing portions 133 may also be one, three or four, as long as the above-ground support member 12 and the mounting sleeve 13a can be stably connected.

When the mounting end 1221 of the above-ground support member 12 is arranged in the accommodating cavity 1312 of the mounting sleeve 13a, and when the mounting sleeve 13a is arranged in the mounting hole 110, a portion of the above-ground support member 12 located outside the mounting hole 110 is sealed. Exemplarily, in the embodiment of this application, the expression of "sealed" in the description of "a portion of the above-ground support member 12 located outside the mounting hole 110 is sealed" refers to: a portion of the above-ground support member 12 located outside the mounting hole 110 has no through hole exposed to the air. Alternatively, the expression of "sealed" means that a portion of the above-ground support member 12 located outside the mounting hole 110 is provided with a groove (not shown), but the groove is not in communication with the inside of the above-ground support member 12. The term "sealed" may mean that any opening in the above-ground support member 12 is covered and/or surrounded by the mounting sleeve 13a and the interior of the mounting hole 110, preferably water tightly covered. Any exterior part of the above-ground support member 12 not inserted in or in contact with the mounting sleeve 13a may be provided without an opening to the interior of the above-ground support member 12. This may apply to all parts of the above-ground support member 12 not in contact with the ground. However, the above-ground support member 12, e.g. when implemented as first vertical support member 213 may be formed hollow with an opening at the end of the hollow structure being in connection with the support base 2131.

In the above ways, water is prevented from entering the inside of the above-ground support member 12 to cause rusting of the above-ground support member 12, the service life of the above-ground support member 12 can be guaranteed, and the safety can be improved.

In the embodiment of the present application, although cross sections of the first horizontal support member 11 and the above-ground support member 12 are circular, the embodiment of the present application does not specifically limit their shape. For example, the cross sections of the first horizontal support member 11 and the above-ground support member 12 may also have oval shapes, square shapes, etc.

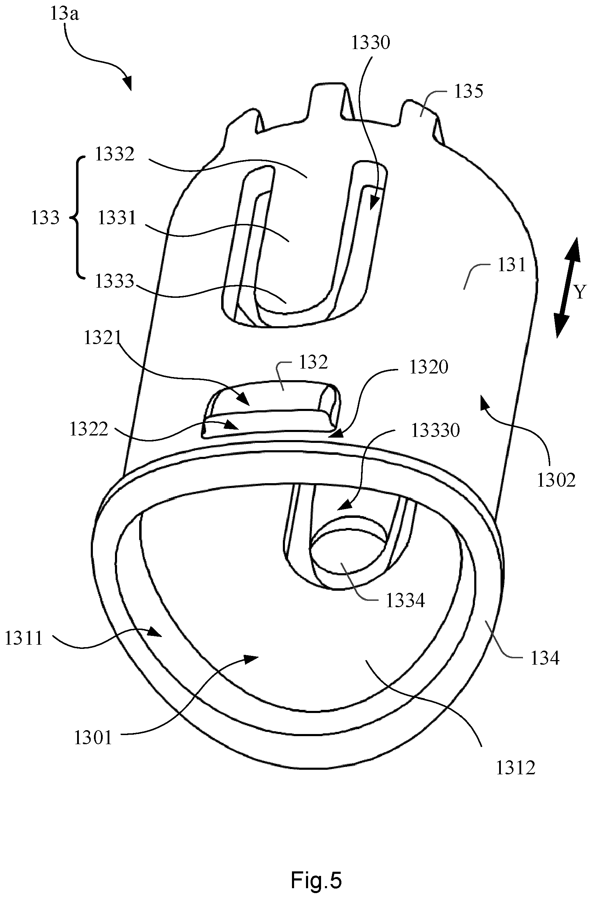

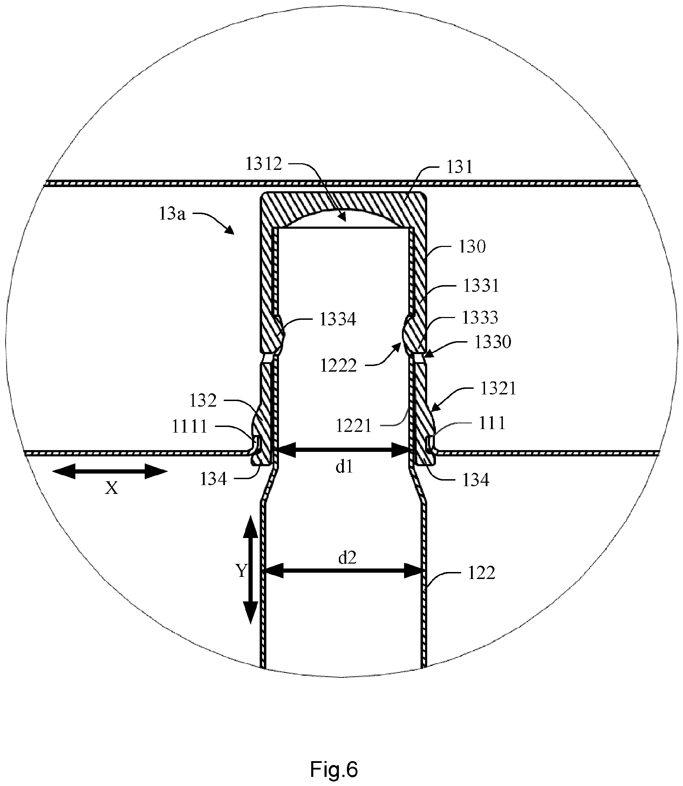

In a possible implementation, referring to FIGS. 5 and 6 in conjunction with FIG. 4, the fixing portion 133 is arranged on the first side wall 130. Specifically, the fixing portion 133 may be an elastic arm 1331, the first side wall 130 may be provided with a slot 1330, and after the elastic arm 1331 is connected to an edge of the slot 1330, the slot 1330 is arranged around the elastic arm 1331 so as to provide a deformation space for the elastic arm 1331. The slot 1330 may be U-shaped.

Exemplarily, the elastic arm 1331 may comprise: a first end 1332 and a second end 1333, wherein the first end 1332 is connected to the edge of the slot 1330 (exemplarily, in the embodiment of the present application, the first end 1332 is integrally formed with the first side wall 130 of the mounting sleeve body 131 at a position corresponding to the slot 1330), and the second end 1333 is a free end, that is to say, the second end 1333 is not connected to the edge of the slot 1330, such that the second end 1333 can bend or deviate toward the inside and the outside of the accommodating cavity under the action of the elastic arm 1331 so as to allow deformation.

Exemplarily, an inner side wall 13330 of the free end comprises a protrusion 1334, and a through hole 1222 is correspondingly provided in a side wall of the mounting end 1221. The protrusion 1334 may be configured to snap-fit with the through hole 1222 so as to limit the mounting end 1221 and the mounting sleeve 13a in the first direction Y, thereby arranging the mounting end 1221 in the accommodating cavity 1312 of the mounting sleeve 13a.

Specifically, a surface of the protrusion 1334 may have a guiding function. The surface of the protrusion 1334 may be arc-shaped, and the arc-shaped surface has a guiding function. However, the shape of the surface of the protrusion 1334 is not limited to an arc-shape. The protrusion 1334 protrudes towards the inside of the mounting sleeve 13A. In the process of arranging the mounting end 1221 in the mounting sleeve 13a, the mounting end 1221 enters, in the first direction Y, the accommodating cavity 1312 of the mounting sleeve body 131 from the opening 1311. When the mounting end 1221 is in contact with the protrusion 1334, under the guidance of the surface of the protrusion 1334, the elastic arm 1331 moves outward in a direction away from the accommodating cavity 1312. In this process, the mounting end 1221 continues to move toward the inside of the accommodating cavity 1312 in the first direction Y. When the mounting end 1221 moves to a position where the through hole 1222 is opposite to the protrusion 1334, under the elastic action of the elastic arm 1331, the protrusion 1334 springs back and is in concave-convex fit (i.e. snap-fit) with the through hole 1222. In this case, the mounting end 1221 may be arranged or held in the mounting sleeve 13a to implement the connection between the above-ground support member 12 and the first horizontal support member 11. However, this does not mean that the mounting end is fixedly arranged or held in the mounting sleeve in a snap-fitting manner. On the contrary, the mounting end 1221 is detachably arranged or held in the mounting sleeve 13a. After the mounting end of the above-ground support member is arranged in the mounting sleeve, the protrusion can play the effect of avoiding pool collapse caused by the mounting end falling off from the mounting sleeve due to the shaking of the pool. When a user needs to detach the support assembly, the protrusion can be detached from the through hole only by slightly pulling the above-ground support member, thereby implementing the detachment of the mounting end from the mounting sleeve. By means of the structure described above, the above-ground support member 12 and the first horizontal support member 11 may be connected or detached conveniently and quickly.

That is to say, when the above-ground support member 12 is connected to the first horizontal support member 11, the connection can be implemented only by inserting the mounting end 1221 into the accommodating cavity 1312 from the opening 1311 of the mounting sleeve body 131 in the first direction, without other operations. The mounting is convenient and fast and preferably watertight. The overall structure of the mounting sleeve 13a is substantially arranged in the mounting hole 110 of the first horizontal support member 11. Water does not enter the support member from a connection position between the mounting sleeve and the mounting end, such that a very good waterproof effect can be achieved. In other words, the mounting ends 1221 provided with the through hole 1222 are fully inserted into the mounting sleeve 13a inside the mounting hole 110 and thereby sealed from the outside.

Exemplarily, a positioning member is provided on an outer surface 1302 of the first side wall 130 of the mounting sleeve body 131 to fix the mounting sleeve 13a in the mounting hole 110.

In a possible implementation, continuing to refer to FIGS. 5 and 6 in combination with FIG. 4, the positioning member comprises two bumps or protrusions 132, and the two bumps 132 are each arranged oppositely in a radial direction of the mounting sleeve 13a and are located on the outer surface 1302 of the first side wall 130 of the mounting sleeve body 131. The number of bumps 132 is not specifically limited in the embodiment of the present application. Exemplarily, three, four or more bumps 132 may also be arranged.

Illustratively, each of the two bumps 132 is close to the opening 1311 in the first direction Y. Each of the two bumps 132 is configured to abut against an edge 111 of the mounting hole 110 so as to fix the mounting sleeve 13a in the mounting hole 110.

Specifically, each of the two bumps 132 comprises a guide surface 1321 and a bottom surface 1322. The bottom surface 1322 faces the opening 1311 in the first direction Y, and the bottom surface 1322 is configured to abut against the edge 111 of the mounting hole 110. The guide surface 1321 extends away from the opening 1311 in the first direction Y.

In a possible implementation, referring to FIG. 6, the guide surface 1321 is a cambered surface.

In another possible implementation, the guide surface 1321 is an inclined surface which inclines toward the mounting sleeve body 131 in the horizontal direction X (not shown in FIG. 6).

In the process of arranging the mounting sleeve 13a in the mounting hole 110, the mounting sleeve 13a is inserted into the mounting hole 110 in the first direction Y, the guide surface 1321 is first in contact with the edge 111 and then continues to move toward the inside of the mounting hole 110 in the first direction Y until the edge 111 goes cross the bottom surface 1322, and at this point, fixing the mounting sleeve 13a and the mounting hole 110 is completed.

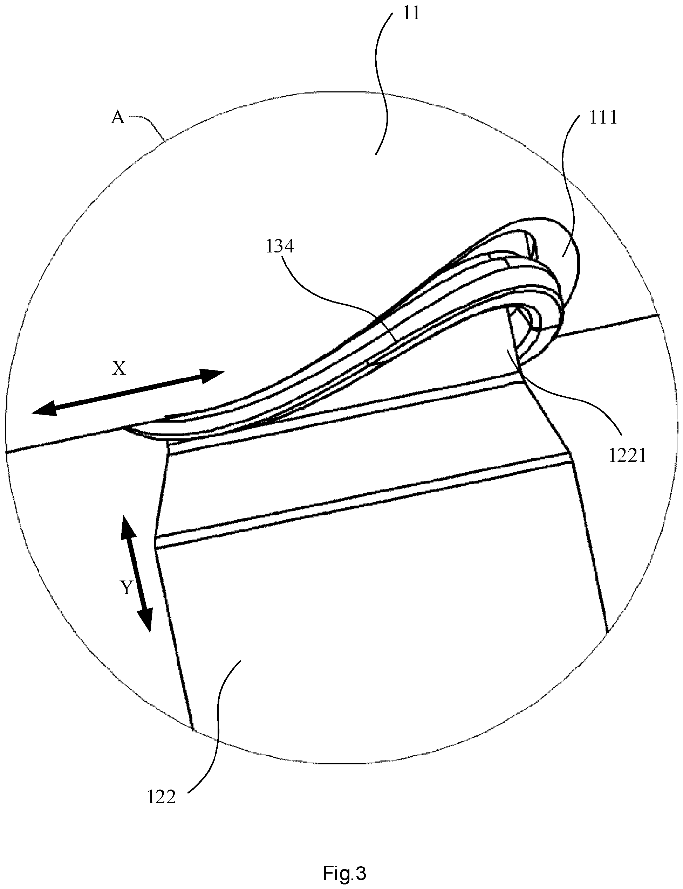

Continuing to refer to FIG. 5, in another possible implementation, an annular flange 134 is provided at a position of the outer surface 1302 of the first side wall 130 close to the opening 1311 in the first direction Y. Referring to FIG. 3, the shape of the annular flange 134 matches the shape of the edge 111 of the mounting hole 110 so as to close the mounting hole 110.

Referring to FIGS. 5 and 6, the annular flange 134 extends toward the outside of the accommodating cavity along the outer surface of the first side wall. In the first direction Y, the annular flange 134 is spaced from the bump 132 to form a limiting groove 1320. The limiting groove 1320 is configured to snap-fit with the edge 111 of the mounting hole 110 so as to limit the mounting sleeve 13a and the first horizontal support member 11 in the first direction Y, further improving the fixing effect of the mounting sleeve 13a and the first horizontal support member 11.

In a possible implementation, the outer wall of the first horizontal support member is bent or inclined in a position corresponding to the mounting hole toward the inside of the first horizontal support member 11 to form a snap-fitting portion 1111. The snap-fitting portion 1111 is configured to snap-fit with the limiting groove 1320. The size of the snap-fitting portion 1111 in the first direction Y matches the size of the limiting groove 1320 in the first direction Y, so as to further improve the fixing effect of the mounting sleeve 13a and the first horizontal support member 11.

It should be noted that in the embodiment of the present application, the first horizontal support member 11 is a tubular component, and the length of the mounting sleeve 13a in the first direction Y is approximately the same as the pipe diameter of the first horizontal support member 11. When the mounting sleeve 13a is fixed in the mounting hole 110, the portion of the mounting sleeve 13a except for the annular flange 134 is located inside the first horizontal support member 11. That is to say, in the embodiment of the present application, the connection between the mounting end 1221 and the mounting sleeve 13a is located inside the first horizontal support member 11, and the portion of the mounting end 1221 located outside the first horizontal support member 11 is not provided with a through hole, so that the phenomenon of water entering the inside of the above-ground support member 12 to cause rusting of the above-ground support member 12 can be effectively prevented, the service life of the above-ground support member 12 can be guaranteed, and the safety can be improved.

Exemplarily, referring to FIG. 5, reinforcing ribs 135 are provided at an end of the mounting sleeve body 131 away from the opening 1311 in the first direction, and the reinforcing ribs 135 can increase the structural strength of the mounting sleeve body 131.

Exemplarily, referring to FIG. 6, an outer diameter d1 of the mounting end 1221 is less than an outer diameter d2 of a remaining portion of the above-ground support member 12.

The embodiment of the present application does not specifically limit the cross-sectional shape of the mounting sleeve body 131 perpendicular to the first direction Y. For example, in the embodiment of the present application, the cross-sectional shape of the mounting sleeve body 131 is circular, and the mounting hole 110 is also correspondingly circular. The mounting sleeve 13 is circular or oval to match the shape of the mounting hole 110. However, the shape is not limited thereto. The mounting sleeve body 131 and the mounting hole 110 may also be oval, square, or in other shapes.

### Embodiment II

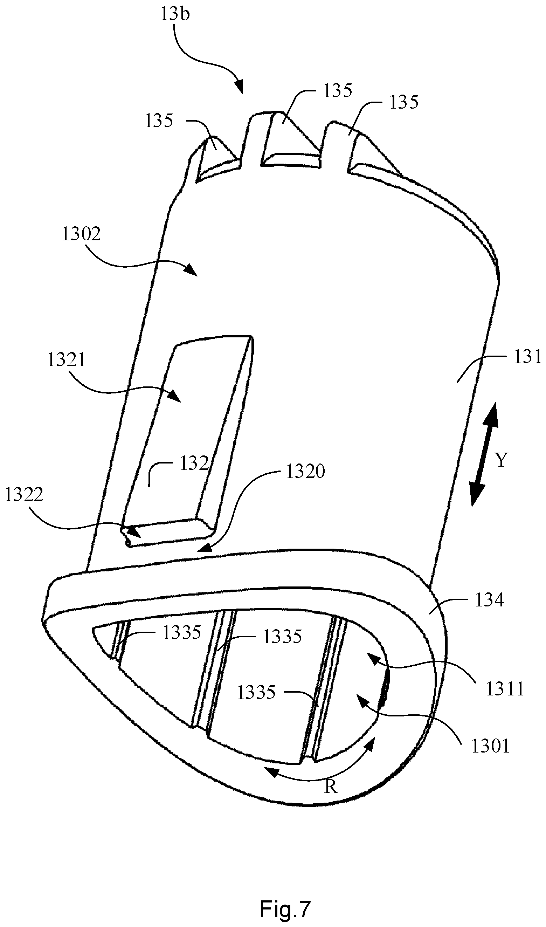

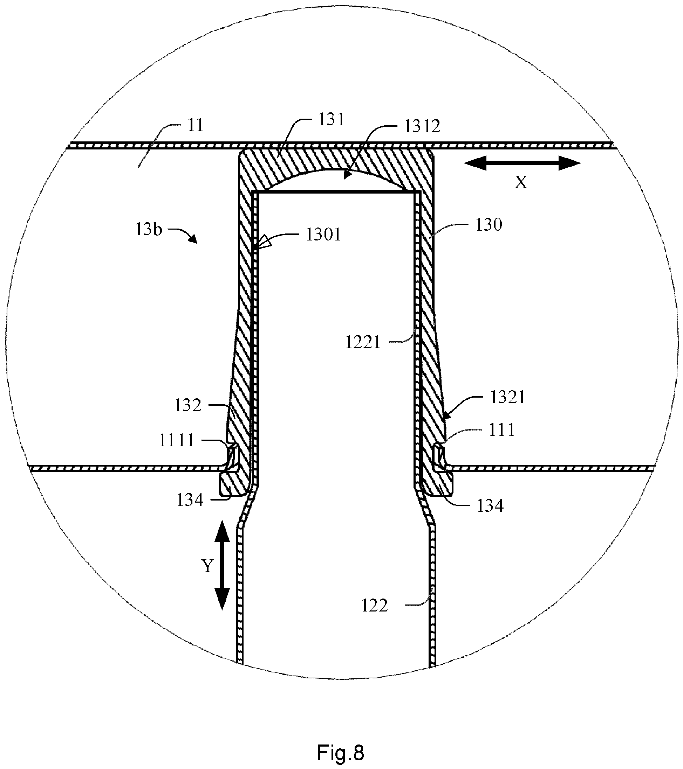

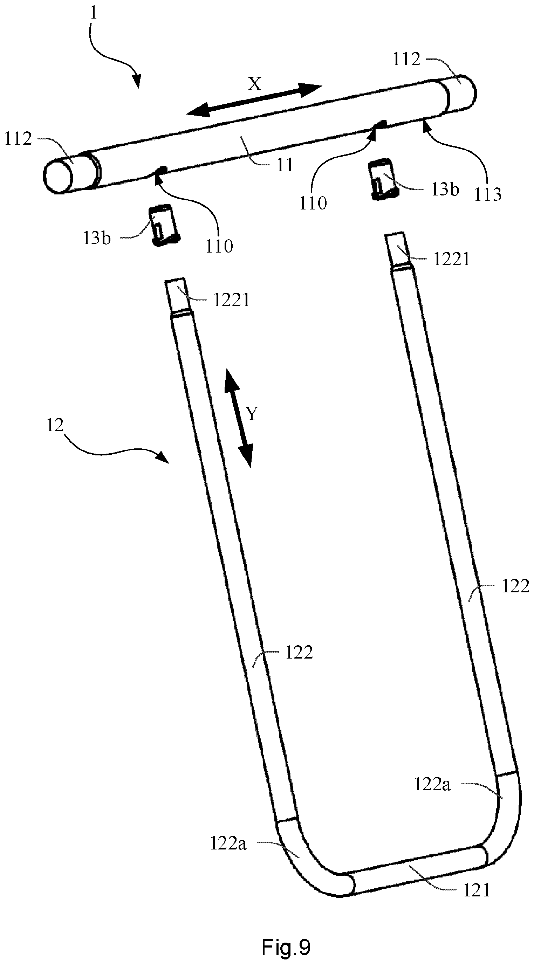

Referring to FIGS. 7 to 9, a support assembly 1 according to an embodiment of the present application comprises: a first horizontal support member 11, an above-ground support member 12 and mounting sleeves 13b. The first horizontal support member 11 and the above-ground support member 12 in the embodiment of the present application are the same as the first horizontal support member 11 and the above-ground support member 12 described in Embodiment I, and therefore will not be repeated.

Compared with Embodiment I, the difference between the support assembly 1 of the embodiment of the present application lies in that a fixing portion 133 of the mounting sleeve 13b is provided as a plurality of protruding ribs 1335, the plurality of protruding ribs 1335 being arranged at intervals on an inner surface 1301 of the first side wall 130 of the mounting sleeve body 131 in a circumferential direction R of the mounting sleeve body 131. Each protruding rib 1335 of the plurality of protruding ribs 136 extends in a first direction Y. The plurality of protruding ribs 1335 are configured to be in interference fit with the mounting end 1221. Correspondingly, the mounting end 1221 is not provided with a through hole to prevent water from entering the inside of the above-ground support member 12 to cause the rusting of the above-ground support member 12, such that the service life of the above-ground support member 12 can be guaranteed, and the safety can be improved.

Accordingly, in the embodiment of the present application, the mounting end 1221 may not be provided with a through hole to play a better waterproof effect.

The embodiment of the present application does not specifically limit the number of the protruding ribs 1335, as long as the mounting end 1221 can be firmly arranged in the mounting hole 110.

During mounting, the mounting end 1221 is inserted into the accommodating cavity 1312 from the opening 1311 in the first direction Y. After the mounting end 1221 is inserted into the accommodating cavity 1312, the plurality of protruding ribs 136 are in interfere fit with the mounting end 1221 to arrange the mounting end 1221 in the accommodating cavity 1312, so that the mounting is simple, convenient and fast.

Referring to FIG. 7, compared with Embodiment I, in the embodiment of the present application, a guide surface 1321 of a bump 132 is an inclined surface inclining toward the mounting sleeve body 131 in a horizontal direction X.

In another possible implementation, the guide surface 1321 of the bump 132 may also be a cambered surface (as shown in FIG. 5).

In an embodiment, the fixing portion 133 of Fig. 5 and the fixing portion 133 of Fig. 7 may both be provided together.

Although the present invention has been illustrated and described with reference to some preferred implementations of the present invention, those of ordinary skill in the art should understand that the above contents are further detailed descriptions for the present invention in conjunction with specific implementations, and it cannot be assumed that the specific implementations of the present invention are limited to these descriptions. Those skilled in the art can make various changes in form and details, including several simple deduction or substitutions, without departing from the scope of the present invention.

## Claims

1. A support assembly (1), **characterized by** comprising:
a first horizontal support member (11), at least one mounting hole (110) being provided in a lower surface (113) of an outer wall of the first horizontal support member (11);
an above-ground support member (12) having at least one mounting end (1221);
mounting sleeves (13, 13a, 13b) arranged in the mounting holes (110), the mounting sleeves (13, 13a, 13b) each comprising:
a mounting sleeve body (131) comprising a first side wall (130) and an accommodating cavity (1312), the accommodating cavity (1312) accommodating the mounting end (1221); and
at least one fixing portion (133) arranged on the first side wall (130), each of the at least one fixing portion (133) being configured to hold the mounting end (1221) in the mounting sleeve (13, 13a, 13b).

2. The support assembly (1) of claim 1, wherein the mounting sleeve body (131) comprises:
at least one bump (132) arranged on an outer surface (1302) of the first side wall (130); and
an annular flange (134) extending along the outer surface (1302) of the first side wall (130) toward the outside of the accommodating cavity (1312), the annular flange (134) being spaced from the bump (132) to define a limiting groove (1320).

3. The support assembly (1) of claim 2, wherein the at least one bump (132) comprises a guide surface (1321) and a bottom surface (1322), the bottom surface (1322) configured to abut against an edge (111) of the mounting hole (110), the guide surface (1321) extending away from an opening (1311) of the mounting sleeve body (131).

4. The support assembly (1) of any one of claims 2 or 3, wherein the outer wall of the first horizontal support member (11) is bent in a position corresponding to the mounting hole (110) toward the inside of the first horizontal support member (11) to form a snap-fitting portion (1111), and the snap-fitting portion (1111) is arranged in the limiting groove (1320) to arrange the mounting sleeve body (131) in the mounting hole (110).

5. The support assembly (1) of any one of the preceding claims, wherein
a through hole (1222) is provided in a side wall of the mounting end (1221); and
the first side wall (130) is provided with a slot (1330), each of the at least one fixing portion (133) being arranged in the slot (1330) and comprising:
an elastic arm (1331) comprising a first end (1332) and a second end (1333), the first end (1332) being connected to an edge (111) of the slot (1330); and
a protrusion (1334) arranged at the second end (1333) and configured to snap-fit with the through hole (1222).

6. The support assembly (1) of any one of the preceding claims, wherein the fixing portion (133) comprises:
a plurality of protruding ribs (136, 1335) arranged on an inner surface (1301) of the first side wall (130) at intervals in a circumferential direction of the mounting sleeve body (131).

7. The support assembly (1) of claim 6, wherein the plurality of protruding ribs (1335) are configured to for an interference fit with the mounting end (1221).

8. The support assembly (1) of any one of claims 6 or 7, wherein the mounting end (1221) is provided free of any through hole.

9. The support assembly (1) of any one of the preceding claims, wherein a cross section of the mounting sleeve body (131) is circular or oval.

10. The support assembly (1) of any one of the preceding claims, wherein the above-ground support member (12) is U-shaped.

11. The support assembly (1) of any one of the preceding claims, wherein an outer diameter of the mounting end (1221) is less than an outer diameter of a remaining portion of the above-ground support member (12).

12. The support assembly (1) of any of the preceding claims, wherein the mounting sleeve (13a) is configured attachable and detachable from both the first horizontal support member (11) and the above ground support member (12).

13. A frame pool (2), **characterized by** comprising:
a pool liner (22); and
a pool frame (21) for supporting the pool liner (22), the pool frame (21) comprising:
a plurality of support assemblies as described in any one of claims 1-12, the plurality of support assemblies being sequentially connected in a horizontal direction to form an annular frame.

14. A frame pool (2) of claim 2, wherein
two arc-shaped portions (2101) are symmetrically arranged, each arc-shaped portion (2101) comprising a plurality of second horizontal support members (211), a plurality of first vertical support members (213) and a plurality of T-joints (212), every two adjacent second horizontal support members (211) being connected to the first vertical support member (213) by means of one of the T-joints (212); and
two straight portions (2102) are arranged between the two arc-shaped portions (2101), any one of the two straight portions (2102) comprising at least one support assembly (1) as described in any one of claims 1-8, and the first horizontal support member (11) being connected to the arc-shaped portions (2101).
